# DEMANDE DE BREVET EUROPEEN

(11) **EP 4 082 757 A1**
(43) Date de publication de la demande: **02.11.2022**
(21) Numéro de dépôt: 21170375.6
(22) Date de dépôt: 26.04.2021
(51) Int. Cl.: B29C 65/00, B29C 53/36, B29C 65/48, B29C 53/40, B29D 23/20, B65D 35/02, B65D 65/46, B29L 23/00, B29C 53/00, B29C 53/38, B29L 23/20

(54) **EMBALLAGE DONT LA SOUDURE EST DISSIMULEE DANS L'IMPRESSION ET PROCEDE DE FABRICATION**

(71) Demandeur: Aisapack Holding SA, 1896 Vouvry (CH)
(72) Inventeur: Thomasset, Jacques, 74500 Neuvecelle (FR)
(74) Mandataire: Grosfillier, Philippe

(57) **Abrégé**

L'invention concerne un procédé de fabrication d'un corps tubulaire (2) pour un emballage sous forme de tube (1), comprenant les étapes suivantes:
-) définition des caractéristiques géométriques du corps tubulaire (2) à réaliser;-) création d'une image initiale (6) couvrant la surface du corps tubulaire (2) à réaliser, ladite image initiale (6) ayant un bord latéral droit et un bord latéral gauche;
-) création d'une image intermédiaire (8) à partir de l'image initiale (6) en ajoutant une bande latérale (13) à l'un desdits bords de l'image initiale, ladite bande latérale (13) comprenant une réplique de l'autre desdits bords de l'image initiale;
-) impression d'au moins une image intermédiaire (8) sur une feuille, l'image intermédiaire (8) étant disposée de telle sorte que les bords latéraux de l'image est parallèle à la direction de déroulement de la feuille;
-) découpe d'une bandelette de chaque côté latéral de l'image intermédiaire (8) pour former une image finale (10);
-) conformation de la feuille en corps tubulaire (2) et assemblage bord à bord pour obtenir une continuité du décor entre le bord droit et le bord gauche de l'image.

## Description

### DOMAINE TECHNIQUE

L'invention se situe dans le domaine des emballages formés au moyen de feuilles imprimées soudées ou collées. Elle concerne plus précisément les emballages comportant un corps tubulaire obtenu par soudage ou collage bout à bout d'une feuille. L'invention s'applique dans le domaine de l'emballage et en particulier celui des tubes flexibles recyclables destinés à contenir des produits des crèmes ou pâtes; ou celui des cannettes en remplacement de l'aluminium pour contenir des liquides; ou celui des flacons pour des produits cosmétiques.

### ETAT DE LA TECHNIQUE

Le soudage bout à bout de structure de feuilles pour fabriquer des corps de tube est déjà décrit dans l'art antérieur et notamment dans les publications US5569144, US4733800, EP2720849, EP2720850, EP2007567, EP2004506, EP2004389.

Les publications EP2720849 et EP2720850 enseignent un procédé de soudage bout à bout d'une feuille multicouche pour former un corps tubulaire. La publication EP2720849 propose de couper en biseau avec des angles différents les bords de façon à former un léger chevauchement des bords de la feuille dans la zone de soudure. La publication EP2720849 quant à elle enseigne de couper en biseau les bords de la feuille et d'exercer une pression circonférentielle sur lesdits bords lors de l'opération de soudage. Ces publications n'enseignent pas comment obtenir une continuité du décor dans la zone soudée pour dissimuler la soudure.

Les publications EP2007567, EP2004506, EP2004389 proposent notamment d'ajouter une bande de renfort au niveau de la soudure bout à bout des extrémités afin que la soudure ait une résistance suffisante. Le soudage bout à bout proposé dans ces publications permet également un corps tubulaire ayant une décoration dans la zone la soudure. La possibilité de masquer la zone de soudure par la décoration est un grand avantage dans le domaine de l'emballage surtout lorsqu'il est destiné au secteur cosmétique. Cependant, l'art antérieur ne permet pas d'obtenir la continuité de la décoration des deux côtés de la soudure avec une grande précision

Les publications EP2720849, EP2720850, EP2007567, EP2004506 et EP2004389 permettent une amélioration significative de l'esthétique des emballages soudés parce qu'ils permettent d'appliquer la décoration dans la zone de soudure. Cependant, les décors que l'on peut utiliser dans la zone de soudure restent généralement limités car on observe régulièrement un décalage entre la partie gauche et la partie droite de la soudure.

La publication EP3300881 propose une méthode de coupe des bords de la feuille imprimée avant soudage pour améliorer l'esthétique de la soudure des extrémités d'une feuille imprimée ; lesdites extrémités étant soudées par recouvrement. La méthode propose d'utiliser les bords du cliché imprimé pour piloter la position de la coupe. Cette méthode permet d'améliorer l'esthétique des soudures par recouvrement mais ne peut pas être appliquée au soudage bout à bout pour résoudre le problème de décalage des motifs de part et d'autre de la soudure.

L'invention a pour but d'améliorer les procédés connus.

Plus particulièrement, l'invention a pour but de proposer des moyens simples pour réaliser un corps tubulaire décorés sur toute sa surface dont la soudure n'est pas visible.

L'invention permet de remédier aux inconvénients précités. En particulier l'invention permet de réaliser une soudure bout à bout avec une continuité du décor dans la zone soudée afin de dissimuler la soudure et éviter les décalages visibles qui se produisent dans l'état de la technique.

### SOMMAIRE ET PRINCIPE DE L'INVENTION

L'invention concerne un procédé de réalisation de tubes par soudage d'une feuille imprimée et ayant une décoration dite « à 360° » ; c'est-à-dire qui s'étend sur toute sa périphérie.

L'invention concerne notamment un procédé permettant de dissimuler la zone de soudure dans le décor.

Plus spécifiquement, l'invention concerne un procédé de fabrication d'un corps tubulaire en continu consistant au moins à imprimer une série d'images successives sur une feuille conditionnée en bobine ; à dérouler ladite feuille définissant ainsi une direction de défilement, à couper les bords latéraux de ladite feuille afin que la largeur résiduelle de la feuille soit en adéquation avec diamètre du corps tubulaire à réaliser, à conformer la feuille en géométrie tubulaire, à souder bord à bord les extrémités latérales de la feuille, puis à couper le corps tubulaire perpendiculairement à la direction de défilement et de façon synchronisée avec les images.

Dans des modes d'exécution, l'invention se caractérise notamment par le fait que la largeur de l'image imprimée sur la feuille est supérieure au périmètre du corps tubulaire à réaliser et par le fait qu'une première partie située sur le bord gauche de l'image est identique à une seconde partie située sur le bord droit de l'image ; lesdites parties gauche et droite formant deux bandes latérales parallèles de largeur identique.

Selon des modes d'exécution de l'invention, on effectue une opération de découpe des bords de la feuille pour mettre en adéquation la largeur finale de la feuille avec le diamètre du corps tubulaire à produire. Selon des modes d'exécution de l'invention, la découpe des bords se situe à l'intérieur des bandes latérales.

Selon des modes d'exécution de l'invention, le diamètre du corps tubulaire à produire est utilisé pour définir les dimensions d'une l'image dite "image initiale". La largeur de l'image initiale est définie par le périmètre du corps tubulaire à produire et la hauteur de l'image initiale est définie par la longueur du corps tubulaire.

Selon des modes d'exécution de l'invention, l'image initiale est utilisée pour produire une image dite "image intermédiaire" en ajoutant à gauche de l'image initiale une bande latérale correspondant à la copie du bord latéral droit de l'image initiale; ou inversement en ajoutant à droite de l'image initiale une bande latérale correspondant à la copie du bord latéral gauche de l'image initiale. Ainsi, l'image intermédiaire comporte au moins deux zones identiques situées au niveau des bords latéraux.

Une succession d'images intermédiaires est imprimée sur une feuille qui est ensuite conditionnée en bobine mère, le bord latéral de l'image étant parallèle à la direction de déroulement de la feuille. L'impression de la feuille peut être faite en une ou plusieurs pistes. Les opérations courantes de découpe de la feuille imprimée permettent d'ajuster les laizes et conditionner les images intermédiaires en "bobines filles" ; les bobines filles ne comportant qu'une seule piste d'images.

Dans le processus de fabrication du corps tubulaire selon des modes d'exécution de l'invention, la largeur de l'image intermédiaire est ensuite réduite par découpe d'une bandelette sur chaque bord latéral. L'image obtenue après découpe des bords est dite « image finale » qui se caractérise par une continuité du décor entre le bord latéral gauche et le bord latéral droit.

Lors de la mise en œuvre de modes d'exécution de l'invention, on utilise le critère de continuité du décor entre le bord gauche et le bord droit de l'image finale pour ajuster la largeur résiduelle de la feuille. La largeur résiduelle prédétermine le diamètre du corps tubulaire qui est obtenu en juxtaposant et soudant bord à bord les bords latéraux de la feuille après découpe de la bandelette sur chaque bord latéral. In fine, un corps tubulaire avec une décoration à 360° est obtenu.

Des différences sont généralement observées entre le diamètre théorique et le diamètre réel du corps tubulaire. Ces faibles différences peuvent résulter de variations dimensionnelles de la feuille sous l'effet de contraintes mécaniques ou/et thermiques. Une optimisation de la largeur finale de la feuille et du diamètre du corps tubulaire selon l'invention est par conséquent nécessaire pour obtenir la décoration à 360° telle que spécifiée dans l'invention.

Les variations inhérentes aux dispositifs de fabrication engendrent des variations plus ou moins importantes des produits fabriqués. Ces variations peuvent être réduites en utilisant des méthodes de régulation plus ou moins sophistiquées. Cependant, ces méthodes de régulation à elles seules ne permettent pas d'obtenir la qualité visuelle recherchée au niveau de la soudure bord à bord et de la continuité du décor de chaque côté de la soudure.

Un grand avantage de l'invention et de ses modes d'exécution est de permettre de s'affranchir en grande partie des variations au niveau de la soudure bord à bord qui pourraient être créées par le dispositif de fabrication. Ainsi selon des modes d'exécution de l'invention, la largeur des bandes latérales imprimées est supérieure à l'amplitude des variations de position de la feuille perpendiculairement à l'axe de défilement. Par exemple, la position de la feuille peut varier perpendiculairement à l'axe de défilement lors de l'impression ou lors de la découpe des bords de la feuille. Selon des modes d'exécution de l'invention, la largeur des bandes latérales est telle que la découpe des bords se situe toujours dans lesdites bandes latérales.

Selon des modes d'exécution de l'invention, le procédé peut être optimisé afin de diminuer les chutes créées par la découpe des bords. A cet effet, des systèmes de guidage de la feuille peuvent être utilisés pour limiter les variations du procédé. Ainsi des systèmes de guidage utilisant un ou plusieurs capteurs détectant la position latérale de la bande pendant l'impression, permet de réguler la position latérale de la feuille et diminuer ainsi les variations de position des images par rapport au bord de la feuille. Alternativement des moyens de guidage fixes peuvent être utilisés.

Un second système avantageusement utilisé permet de réguler la position de la feuille lors de la découpe des bords avant l'opération de formation du corps tubulaire. Selon un mode préférentiel, le second système comprend un ou plusieurs capteurs détectant la position latérale de l'image et régulant la position latérale de la feuille lors de la découpe des bords. Selon une méthode alternative, le capteur détecte le bord de la feuille pour la régulation. Selon un autre mode, des moyens de guidage fixes sont utilisés.

Selon des modes d'exécution de l'invention, le procédé comporte également une étape d'ajustement final du diamètre du corps tubulaire, le diamètre du corps tubulaire étant prédéfini par l'image finale. Un premier mode consiste à ajuster le diamètre préalablement à l'opération de soudage. Un mode alternatif consiste à ajuster le diamètre conjointement à l'opération de soudage.

Selon des modes d'exécution, l'invention concerne également un emballage dont au moins une partie est fabriquée par un procédé selon l'invention.

Selon ces modes d'exécution, l'invention concerne plus spécifiquement un emballage comportant une soudure dissimulée dans le décor.

Plus spécifiquement, l'invention concerne un emballage comportant au moins un corps tubulaire décoré et fabriqué à partir d'une feuille imprimée et soudée bord à bord selon les principes de la présente invention.

Plus spécifiquement, selon des modes d'exécution, l'invention concerne un tube comprenant un corps tubulaire flexible et décoré selon la méthode décrite dans la présente demande, dont une extrémité est reliée à une tête de tube ; et dont l'autre extrémité est pincée et soudée sur elle-même formant une soudure dite finale. La tête de tube comporte au moins un orifice pour l'extraction du produit contenu dans l'emballage. L'emballage peut comprendre également des moyens d'ouverture et fermeture dudit emballage.

Le tube tel que décrit précédemment comporte de préférence deux faces principales imposées géométriquement par la soudure finale et éventuellement par un système d'ouverture tel un bouchon à charnière. Les deux faces principales du tube sont utilisées comme vecteur de communication avec par exemple des décorations, images ou impressions appropriées.

L'invention permet notamment d'obtenir des emballages avec des décorations complexes et sans discontinuité sur chaque face. Selon des modes d'exécution de l'invention, la soudure longitudinale est dissimulée dans l'une des deux faces.

Les principes de l'invention permettent par exemple de positionner la soudure sur l'une des faces de l'emballage sans que celle-ci ne soit visible et ne modifie l'esthétique du tube.

Selon un mode d'exécution de l'invention, la soudure bord à bord peut comprendre un ajout de matière du côté de la face interne du corps tubulaire ; l'ajout de matière venant renforcer la soudure bord à bord. Selon un mode d'exécution de l'invention, l'ajout de matière peut être une bande soudée ou de la matière extrudée. Cet ajout de matière peut être placé sur la surface interne du corps tubulaire ou au moins partiellement encastré dans l'épaisseur du corps tubulaire.

Selon des modes d'exécution de l'invention, la soudure est difficilement détectable sur la face externe décorée de l'emballage donc invisible pour l'utilisateur.

Les modes d'exécution de l'invention permettent une continuité du décor de part et d'autre de la soudure et permettent ainsi d'éviter les discontinuités des motifs ou de couleurs au niveau de la soudure.

Les modes d'exécution de l'invention permettent d'utiliser la totalité de la surface du corps tubulaire comme vecteur de communication.

Les modes d'exécution de l'invention permettent de localiser la soudure à l'endroit optimal pour obtenir une grande résistance de l'emballage conjointement à des propriétés esthétiques optimales.

Dans des modes d'exécution, l'invention concerne un procédé de fabrication d'un corps tubulaire pour un emballage, ledit procédé comprenant notamment les étapes suivantes:
-) définition des caractéristiques géométriques du corps tubulaire à réaliser;
-) création d'une image initiale couvrant la surface du corps tubulaire à réaliser, ladite image initiale ayant un bord latéral droit et un bord latéral gauche;
-) création d'une image intermédiaire à partir de l'image initiale en ajoutant une bande latérale à l'un desdits bords de l'image initiale, ladite bande latérale comprenant une réplique de l'autre desdits bords de l'image initiale;
-) impression d'au moins une image intermédiaire sur une feuille, l'image intermédiaire étant disposée de telle sorte que les bords latéraux de l'image sont parallèles à la direction de déroulement de la feuille;
-) découpe d'une bandelette de chaque côté latéral de l'image intermédiaire pour former une image finale;
-) conformation de la feuille en corps tubulaire et assemblage bord à bord pour obtenir une continuité du décor entre le bord droit et le bord gauche de l'image.

Dans des modes d'exécution, on peut imprimer une succession d'images intermédiaires sur une feuille.

Dans des modes d'exécution, les images peuvent être imprimées sur plusieurs pistes parallèles et on peut trancaner la feuille pour obtenir une seule piste d'images.

Dans des modes d'exécution, les caractéristiques du corps tubulaires peuvent être le diamètre et/ou la longueur et/ou l'épaisseur.

Dans des modes d'exécution, l'image initiale peut comprendre un décor formé d'image(s), de dessin(s), de couleur(s) unie(s) ou dégradée(s) ou d'une combinaison de ceux-ci.

Dans des modes d'exécution, l'assemblage bord à bord peut être réalisé par soudage de la feuille ou par extrusion d'un corps tubulaire sur la face interne de la feuille.

Dans des modes d'exécution, le soudage bord à bord peut comprendre des étapes de chauffage, mise en pression et refroidissement des extrémités de la feuille.

Dans des modes d'exécution, après l'opération de soudage un ajout de matière pour renforcer la zone soudée peut être effectué, l'ajout de matière étant effectué par exemple sur la face interne du corps tubulaire et/ou la face externe du corps tubulaire.

Dans des modes d'exécution, l'ajout de matière peut se faire sous forme d'une bande plastique qui est soudée ou collée sur les extrémités de la feuille, ou par ajout d'un cordon de matière extrudée.

Dans des modes d'exécution, le corps tubulaire peut être découpé en segments, l'opération de découpe en segments étant synchronisée avec les images.

Dans des modes d'exécution, la feuille peut être un film monocouche ou multicouche.

Dans des modes d'exécution, la feuille peut être un laminé.

Dans des modes d'exécution, la feuille peut être à base de matière(s) synthétique(s), de cellulose, de matière(s) biosourcée(s), de matière(s) recyclée(s), de matière(s) biodégradable(s), ou un mélange desdites matières.

Dans des modes d'exécution, l'invention concerne un emballage comprenant un corps tubulaire obtenu par un procédé tel que décrit dans la présente demande.

Dans des modes d'exécution, l'emballage peut être un tube, ou un flacon ou une canette ou un autre type d'emballage.

### BREVE DESCRIPTION DES DESSINS

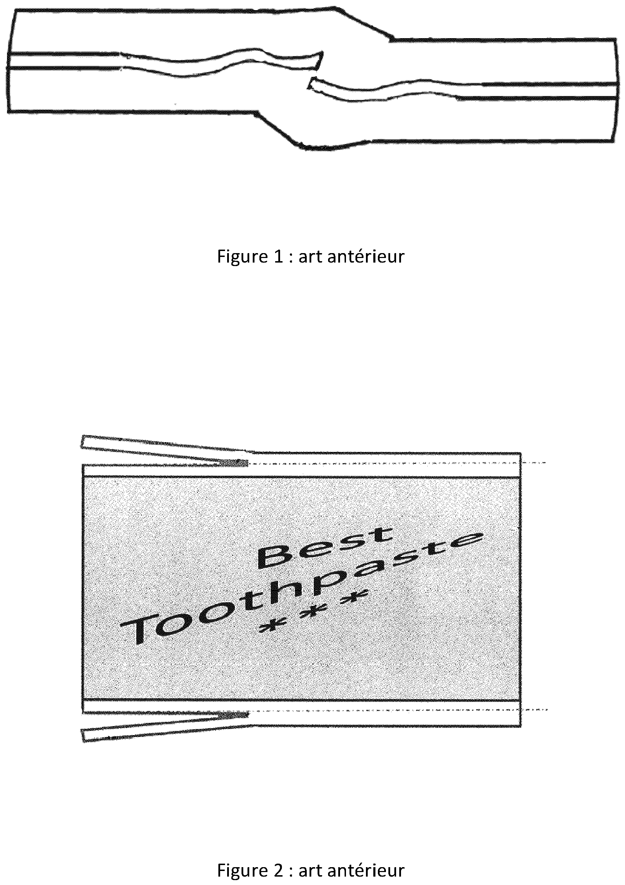

La figure 1 illustre un exemple de configuration de soudage bord à bord selon l'art antérieur, publication EP2720850.
La figure 2 illustre l'opération de découpe des bords latéraux de la feuille selon l'art antérieur, publication EP3300881.
La figure 3 décrit les principales étapes du procédé de réalisation de tube selon l'invention.
La figure 4 illustre les images dites « initiale », « intermédiaire », et « finale » utilisées dans l'invention.
La figure 5 illustre l'étape de découpe d'une bandelette de chaque côté de l'image intermédiaire.
La figure 6 illustre un tube décoré à 360° obtenu selon l'invention.
La figure 7 illustre l'image intermédiaire utilisée pour produire le tube illustré sur la figure 6.

### DESCRIPTION DETAILLEE

1 : tube
2 : corps tubulaire
3 : soudure longitudinale
4 : tête de tube
5 : soudure d'extrémité
6 : image initiale
7 : largeur de l'image initiale
8 : image intermédiaire
9 : largeur de l'image intermédiaire
10 : image finale
11 : largeur de l'image finale
12 : largeur de la feuille
13 : bande latérale
14 : largeur de la bande latérale
15 : position de la coupe à gauche
16 : position de la couche à droite
17 : bord de feuille non imprimé

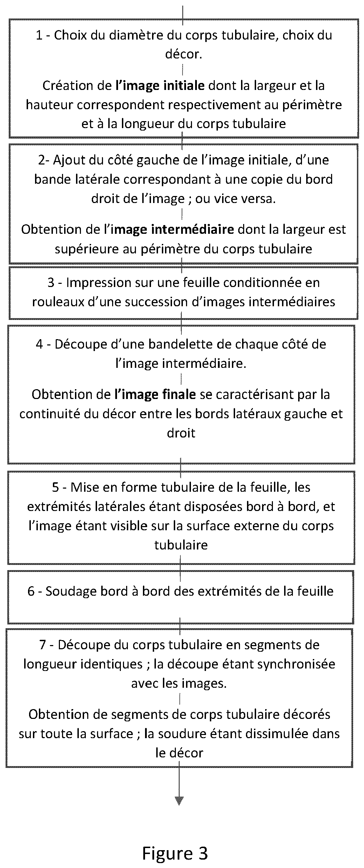

La figure 3 illustre un exemple des étapes du procédé selon l'invention pour la réalisation par soudage de corps tubulaires décorés à 360°, ayant une soudure dissimulée dans la continuité du décor. Selon un mode d'exécution de l'invention, le procédé comprend par exemple les étapes décrites ci-dessous.

Une première étape comprend la définition des caractéristiques géométriques du corps tubulaire à réaliser, c'est-à-dire par exemple son diamètre, sa longueur et son épaisseur. La première étape du procédé comprend également la création du décor que l'on souhaite voir apparaitre sur le pourtour du corps tubulaire. Dans le cadre de la présente invention le décor peut être de tout type: image(s), dessin(s), couleur(s) unie(s) ou dégradée(s) ou une combinaison de ceux-ci etc. Ainsi, est créée une image dite image initiale, dont la largeur et la hauteur correspondent respectivement au périmètre et à la longueur du corps tubulaire. L'image initiale couvre ainsi parfaitement toute la surface du corps tubulaire.

Une seconde étape du procédé comprend la création d'une image intermédiaire en ajoutant une bande latérale à gauche de l'image initiale correspondant à une réplique du bord droit de l'image initiale ; ou vice versa. L'image intermédiaire obtenue est plus large que l'image initiale ; et par conséquent sa largeur est supérieure au périmètre du corps tubulaire à fabriquer.

Une troisième étape comprend l'impression d'une succession d'images intermédiaires sur une feuille qui est ensuite conditionnée en bobine par exemple. Les images intermédiaires sont disposées de telle sorte que les bords latéraux des images soient parallèles à la direction de déroulement de la feuille. En fonction de la largeur de la feuille, les images peuvent être imprimées en une ou plusieurs pistes parallèles entre elles. Dans le cas où les images sont imprimées en plusieurs pistes, la feuille imprimée est ensuite trancanée afin d'obtenir et conditionner une seule piste d'images intermédiaires par bobine.

Une quatrième étape du procédé dite de "rognage" comprend la découpe d'une bandelette de chaque côté latéral de l'image intermédiaire afin d'obtenir une image dite "image finale", l'image finale comprenant une continuité de la décoration entre son bord gauche et son bord droit lorsqu'elle sera conformée en corps tubulaire. La largeur de l'image finale correspond sensiblement au périmètre du tube à fabriquer. Préférentiellement, la quatrième étape est réalisée dans un procédé continu de fabrication des corps tubulaires dans lequel la feuille imprimée est déroulée, rognée, conformée en tube et assemblée bord à bord (par exemple par soudage). Un ajustement précis de la largeur de l'image finale est effectué pour obtenir une continuité du décor entre le bord gauche et le bord droit de l'image.

Une cinquième étape comprend la conformation de la feuille imprimée en géométrie tubulaire, la surface imprimée étant visible du côté externe du tube. Dans cette étape, les extrémités de la feuille imprimée sont disposées bord à bord et le diamètre du corps tubulaire est ajusté pour que les extrémités de la feuille soient en contact sans former de recouvrement ni de retrait au niveau de la zone d'impression.

Une sixième étape comprend le soudage ou le collage bord à bord des extrémités de la feuille. Préférentiellement, on utilise des opérations de chauffage, mise en pression et refroidissement des extrémités de la feuille pour effectuer l'assemblage. Le soudage bord à bord peut comporter un ajout de matière qui renforce la zone soudée. Cet ajout de matière peut être fait sous forme d'une bande plastique qui est soudée ou collée sur les extrémités de la feuille, ou par ajout d'un cordon de matière extrudée. Préférentiellement, l'ajout du renfort est fait sur la face interne du tube. Le corps tubulaire peut comporter également un renfort sur la surface externe de la soudure.

Finalement, une septième étape comprend la découpe du corps tubulaire en segments de longueur similaire ; l'opération de découpe étant synchronisée avec les images. L'opération de découpe finale permet d'obtenir des corps tubulaires décorés sur toute la circonférence, la soudure étant dissimulée dans l'impression.

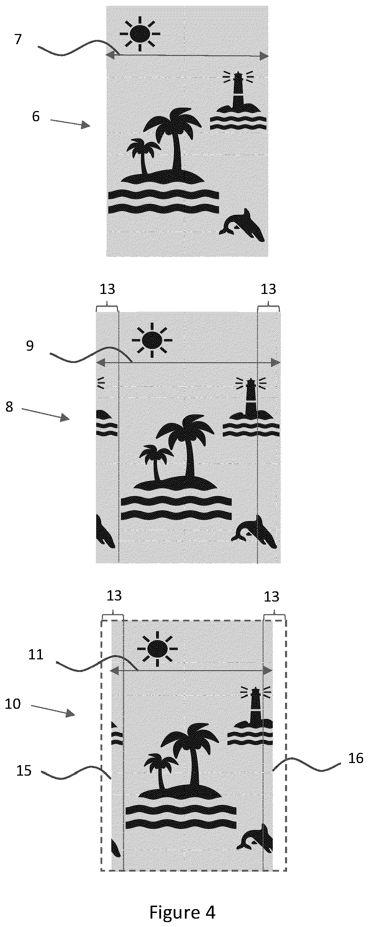

La figure 4 illustre un exemple d'image initiale 6, d'image intermédiaire 8 et d'image finale 10 avec un décor composé d'images/dessins, à titre d'exemple non-limitatif. L'image initiale 6 a une largeur 7 qui correspond au périmètre de la surface extérieure du corps tubulaire à réaliser. La largeur 7 de l'image initiale est mesurée perpendiculairement à la direction de déroulement de la feuille et à l'axe du corps tubulaire. L'image initiale 6 est une image virtuelle (non imprimée) qui correspond au décor que l'on souhaite obtenir sur le corps tubulaire.

La figure 4 illustre l'image intermédiaire 8 qui est construite en ajoutant du côté gauche de l'image initiale une bande 13 copiant la bande 13 du côté droit de l'image initiale. Une autre image intermédiaire (non représentée) pourrait être obtenue en recopiant du côté droit de l'image initiale une bande du côté gauche de l'image initiale. Dans tous les cas, l'image intermédiaire se caractérise par le fait qu'elle comporte deux bandes latérales 13 identiques (l'une étant la copie de l'autre). La bande latérale 13 peut comporter des images, des dessins, des couleurs unies ou dégradées ou une combinaison de ceux-ci etc., l'important étant que les deux bandes latérales soient identiques. L'image intermédiaire 8 obtenue, possède donc une largeur 9 qui est supérieure au périmètre du tube que l'on veut fabriquer. L'image intermédiaire 8 est ensuite imprimée sur la feuille servant à fabriquer le corps tubulaire par soudage des extrémités.

Comme in fine la décoration se situe sur un corps cylindrique décoré à 360°, il est judicieux d'optimiser l'image primaire pour choisir la zone dans laquelle se situe la soudure au niveau de l'emballage. En général, pour un emballage en forme de tube, on évite par exemple que la soudure se situe au niveau du pli formé par la soudure d'extrémité 5 de l'emballage.

La figure 4 illustre également l'image finale 10 que l'on obtient lors de l'opération de rognage des bords de la feuille. Cette opération consiste notamment à prélever une bandelette de chaque côté de la feuille afin de créer une continuité de la décoration entre le bord gauche et le bord droit de la feuille. Cette opération de rognage est nécessaire dans le processus de fabrication afin de supprimer les bords de la feuille qui ont pu être endommagés lors du stockage des bobines, et pour ajuster avec une grande précision la largeur de la feuille avant la formation du corps tubulaire. La figure 4 illustre la largeur 11 de l'image finale qui est ajustée pour obtenir une continuité du décor entre le bord gauche et le bord droit, continuité qui sera réalisée lors de la soudure bord à bord de la feuille conformée en corps tubulaire. La position de la coupe 15 et 16 se trouve à l'intérieur des bandes 13. La distance entre la position de coupe 15 et la position de coupe 16 est fixe pendant la production, ce qui permet des variations négligeables de la largeur 11 pendant toute la production.

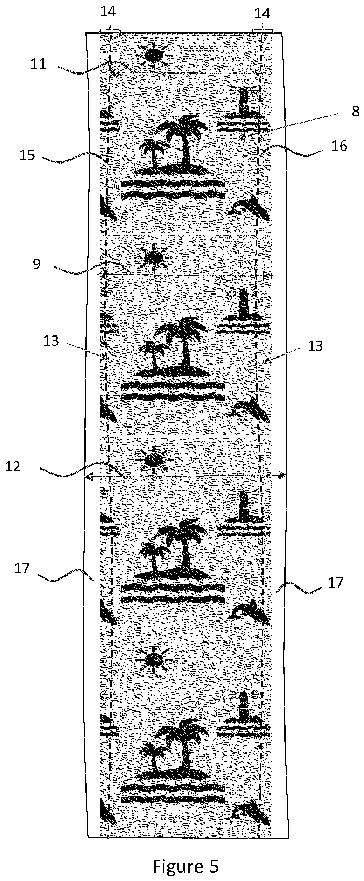

La figure 5 illustre l'un des avantages de l'invention: elle permet de s'affranchir des variations de positionnement latéral de la feuille dans le procédé de fabrication. La figure 5 illustre, de façon amplifiée, le principe de l'invention qui permet de garantir une continuité du décor entre le bord gauche de l'image et le bord droit de l'image même si l'image bouge latéralement. Selon les principes de l'invention, la distance entre les positions de coupe 15 et 16 étant constante, la largeur de l'image finale 11 est constante même si l'image bouge latéralement par rapport aux positions de coupe. Le procédé selon l'invention permet de s'affranchir des variations de positions latérales tant que ces variations sont contenues dans les bandes latérales 13 de largeur 14 puisque les bandes 13 contiennent la même image ou partie d'image. Ainsi l'invention permet de s'affranchir des variations de position latérale de l'image par rapport aux bords de la feuille de largeur 12, ladite feuille pouvant comporter une partie latérale 17 non imprimée. L'invention permet de s'affranchir également des variations de position de la feuille imprimée par rapport aux positions de coupe 15 et 16. Les variations illustrées sur la figure 5 sont illustratives et apparaissent en réalité sur des longueurs de feuille beaucoup plus importantes pouvant correspondre à plusieurs centaines de mètres. L'invention permet de s'affranchir également des variations qui apparaissent lors du changement de bobine, par exemple si le décor sur la seconde bobine est décalé latéralement par rapport à celui de la bobine précédente.

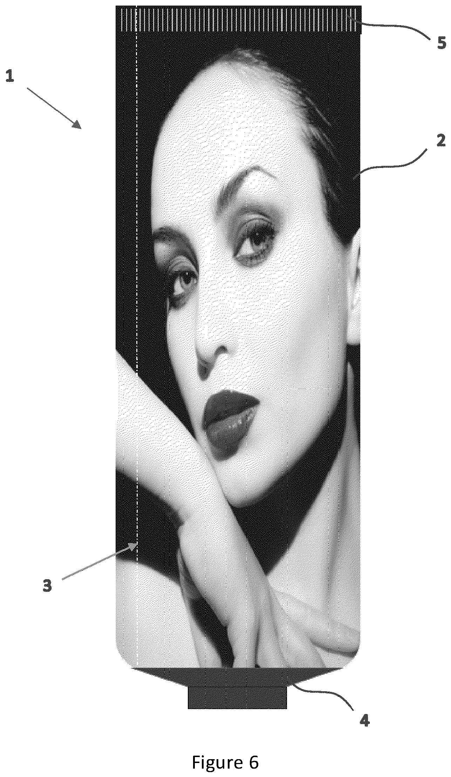

La figure 6 illustre un emballage sous forme de tube 1 obtenu au moyen d'un procédé selon l'invention avec une continuité du décor sur la circonférence. Le tube 1 comprend un corps tubulaire 2 fixé à une tête de tube 4 comportant un orifice pour l'extraction du produit contenu dans l'emballage. Un système d'ouverture-fermeture comme un bouchon (non représenté) est généralement associé à la tête de tube 4. Le corps tubulaire 2 est fermé du côté opposé à la tête de tube grâce à la soudure d'extrémité 5. L'emballage 1 illustré sur la figure 6 se caractérise par le fait que la soudure longitudinale 3 du corps tubulaire 2 est parfaitement dissimulée dans l'image avec une continuité du décor de part et d'autre de la soudure longitudinale 3.

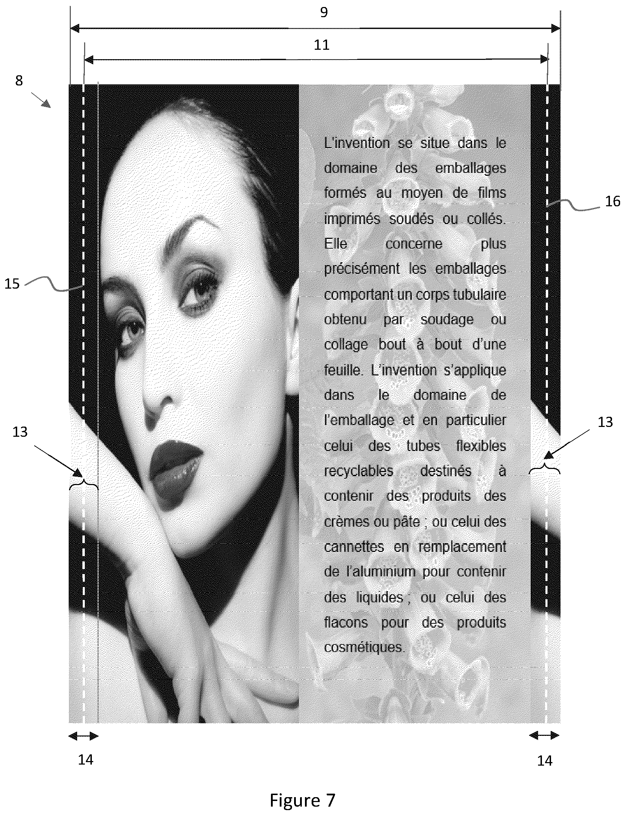

La figure 7 illustre l'image intermédiaire 8 permettant de réaliser l'emballage illustré sur la figure 6. L'image intermédiaire comporte deux bandes latérales 13 identiques de largeur 14 situées sur les bords de l'image. Les positions de coupe 15 et 16 de largeur fixe 11 correspondant au périmètre du tube à réaliser permettent d'obtenir l'image finale par opération de rognage. Selon l'invention les positions de coupe 15, 16 peuvent bouger latéralement à l'intérieur de la bande 13 tout en conservant un écart 11 constant. Selon l'invention, l'image finale obtenue après l'opération de rognage présente une continuité du décor entre le bord gauche et le bord droit de l'image. Cette continuité du décor se retrouve sur le corps tubulaire de part et d'autre de la soudure longitudinale.

La figure 7 illustre les images intermédiaires 8 de largeur 9 imprimées sur la feuille de largeur 12. Les positions de coupe 15 et 16 définissent les images finales de largeur 11 obtenues après l'opération de rognage et avant la conformation en corps tubulaire. L'invention permet de s'affranchir des faibles variations de position latérale relatives entre les outils de coupe 15, 16, les images intermédiaires et les bords de la feuille.

Selon un mode préférentiel de réalisation de l'invention, des moyens sont utilisés pour guider latéralement la feuille dans le procédé et diminuer l'amplitude des variations. Par exemple, il est avantageux d'utiliser des guides bandes asservis par des caméra qui détectent soit le bord de la feuille, soit la position latérale de l'image. Lors de l'opération de rognage, la méthode préférentielle consiste à réguler la position latérale de la feuille en fonction de la position l'image. Cela permet de limiter les chutes lors de l'opération de rognage.

Selon des modes d'exécution de l'invention, la largeur 14 de la bande 13 doit être supérieure à l'amplitude des variations de la position latérale de l'image intermédiaire 8 par rapports aux positions de coupe 15, 16. Selon l'invention la largeur 14 de la bande 13 est par exemple comprise entre 0,5 et 10mm et préférentiellement entre 1 et 3mm.

Selon des modes d'exécution de l'invention la largeur de l'image intermédiaire 13 est par exemple supérieure de 1 à 10mm au périmètre du corps tubulaire et préférentiellement de 2 à 4mm.

Selon des modes d'exécution de l'invention, la largeur de l'image finale est égale à la largeur de l'image initiale aux rétractions près de la feuille pouvant avoir lieu lors de l'opération d'impression.

Selon des modes d'exécution de l'invention le périmètre du corps tubulaire est égal à la largeur de l'image finale aux rétractions près de la feuille pendant l'opération de soudage bord à bord.

La feuille utilisée dans le cadre de l'invention peut être une feuille monocouche ou multicouche dont l'épaisseur est comprise entre 20 et 500 microns et de préférence entre 150 et 450 microns.

La feuille peut être à base de résine plastique, de matière biosourcées, de matière recyclée ou encore de matière biodégradable.

L'impression de la feuille peut être faite en surface ou être emprisonnée dans la structure multicouche de la feuille. Dans le second cas, l'impression de la feuille est suivie d'une étape de lamination pour emprisonner l'impression.

La feuille peut être imprimée en utilisant séparément ou combinant plusieurs techniques comme par exemple, l'impression offset, la flexographie UV, la sérigraphie, la typographie, l'impression par transfert thermique, l'impression numérique.

Le corps tubulaire est fabriqué avec un procédé de soudage bord à bord. De nombreuses configurations décrites dans l'art antérieur peuvent être avantageusement associées à l'invention. Ainsi les bords de la feuille peuvent être coupés à angle droit ou en biseau comme proposé par exemple dans le brevet EP2720849. La soudure bord à bord peut être renforcée par une bande interne et/ou externe comme proposé par exemple dans les publications EP2007567, EP2004506, EP2004389. Une alternative consiste à renforcer la soudure bord à bord par un cordon de soudure tel que décrit par exemple dans la publication EP2089213.

Dans des modes d'exécution, la feuille peut par exemple être:
-) constituée principalement de cellulose, c'est-à-dire de compositions couramment utilisées dans l'industrie du papier. Ces compositions comprennent généralement une majorité de cellulose (par exemple 70% ou plus), des charges minérales (par exemple du carbonate de calcium ou du kaolin), des colorants ou azurants optiques, des liants (par exemple de l'amidon ou du latex), et éventuellement de la lignine. Selon l'invention, l'emballage peut comporter également de fines couches barrière comme par exemple à l'humidité ou à l'oxygène. Ces couches peuvent être en résines thermoplastique comme par exemple en PE, PP EVOH, PVOH, PLA ou des couches minces comme des couches SiOx ou des couches métallisées ou encore des coatings ou nanocoatings;
-) un film multicouche comme décrit dans la publication WO2013/186723, avec un élément de renfort tel que décrit dans cette publication;
-) un laminé tel que décrit dans la publication WO2007/113782;
- ) une bande telle que décrite dans la publication WO2009/125330, en utilisant le procédé de soudage décrit dans cette publication;
-) un laminé tel que décrit dans la publication WO2007/113781 ;
- ) un laminé tel que décrit dans la publication WO 2008/038206;
-) d'un laminé tel que décrit dans la publication WO2007/113780.

Une variante de l'invention consiste à fabriquer le corps tubulaire par extrusion étiquetage selon le procédé décrit dans les publications WO2015/159234 et WO2018/051235. Dans cette variante, la feuille de faible épaisseur est imprimée selon les principes de la présente invention. Dans le procédé continu d'extrusion étiquetage décrit dans les publications WO2015/159234 et WO2018/051235, la feuille est ensuite rognée selon l'invention avant sa conformation en géométrie tubulaire. Ensuite, on procède à l'extrusion d'un corps tubulaire sur la face interne de la feuille conformée en géométrie tubulaire. La feuille peut donc être un film monocouche tel que décrit dans ces publications par exemple, ou un autre film équivalent utilisé dans le domaine des emballages tel que décrits dans la présente demande.

Les modes d'exécution décrits dans la présente demande le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens utilisés dans un mode peuvent être utilisés dans un autre mode.

## Revendications

1. Procédé de fabrication d'un corps tubulaire pour un emballage, ledit procédé comprenant les étapes suivantes:
-) définition des caractéristiques géométriques du corps tubulaire à réaliser;
-) création d'une image initiale couvrant la surface du corps tubulaire à réaliser, ladite image initiale ayant un bord latéral droit et un bord latéral gauche;
-) création d'une image intermédiaire à partir de l'image initiale en ajoutant une bande latérale à l'un desdits bords de l'image initiale, ladite bande latérale comprenant une réplique de l'autre desdits bords de l'image initiale;
-) impression d'au moins une image intermédiaire sur une feuille, l'image intermédiaire étant disposée de telle sorte que les bords latéraux de l'image sont parallèles à la direction de déroulement de la feuille;
-) découpe d'une bandelette de chaque côté latéral de l'image intermédiaire pour former une image finale;
-) conformation de la feuille en corps tubulaire et assemblage bord à bord pour obtenir une continuité du décor entre le bord droit et le bord gauche de l'image.

2. Procédé selon la revendication 1, dans lequel on imprime une succession d'images intermédiaires sur une feuille.

3. Procédé selon la revendication 1 ou 2, dans lequel les images sont imprimées sur plusieurs pistes parallèles et on trancane la feuille pour obtenir une seule piste d'images.

4. Procédé selon l'une des revendications précédentes, dans lequel les caractéristiques du corps tubulaires sont le diamètre et/ou la longueur et/ou l'épaisseur.

5. Procédé selon l'une des revendications précédentes, dans lequel l'image initiale comprend un décor formé d'image(s), de dessin(s), de couleur(s) unie(s) ou dégradée(s) ou d'une combinaison de ceux-ci.

6. Procédé selon l'une des revendications précédentes, dans lequel l'assemblage bord à bord est réalisé par soudage de la feuille ou par extrusion d'un corps tubulaire sur la face interne de la feuille.

7. Procédé selon l'une des revendications précédentes, dans lequel le soudage bord à bord comprend des étapes de chauffage, mise en pression et refroidissement des extrémités de la feuille.

8. Procédé selon l'une des revendications précédentes, dans lequel, après l'opération de soudage un ajout de matière pour renforcer la zone soudée est effectué, l'ajout de matière étant effectué sur la face interne du corps tubulaire et/ou la face externe du corps tubulaire.

9. Procédé selon l'une des revendications précédentes, dans lequel l'ajout de matière se fait sous forme d'une bande plastique qui est soudée ou collée sur les extrémités de la feuille, ou par ajout d'un cordon de matière extrudée.

10. Procédé selon l'une des revendications précédentes, dans lequel le corps tubulaire est découpé en segments, l'opération de découpe en segments étant synchronisée avec les images.

11. Procédé selon l'une des revendications précédentes, dans lequel la feuille est un film monocouche ou multicouche.

12. Procédé selon l'une des revendications précédentes 1 à 9, dans lequel la feuille est un laminé.

13. Procédé selon l'une des revendications précédentes, dans lequel la feuille est à base de matière(s) synthétique(s), de cellulose, de matière(s) biosourcée(s), de matière(s) recyclée(s), de matière(s) biodégradable(s), ou un mélange desdites matières.

14. Emballage comprenant un corps tubulaire obtenu par un procédé selon l'une des revendications précédentes.

15. Emballage selon la revendication précédente, ledit emballage étant un tube, ou un flacon ou une canette.
